# EUROPÄISCHE PATENTANMELDUNG

(11) **EP 3 620 229 A1**
(43) Veröffentlichungstag der Anmeldung: **11.03.2020**
(21) Anmeldenummer: 19000393.9
(22) Anmeldetag: 03.09.2019
(51) Int. Cl.: B01F 7/00, B01F 7/02, B01F 7/10, B01J 2/10, B02C 13/18, B02C 17/16

(54) **VORRICHTUNG UND VERFAHREN ZUR ÄNDERUNG VON SCHÜTTEIGENSCHAFTEN**

(30) Priorität: 07.09.2018 DE 102018007103
(71) Anmelder: HOSOKAWA ALPINE Aktiengesellschaft, 86199 Augsburg (DE)
(72) Erfinder: BIBER, Benjamin, 86514 Ustersbach (DE); DROOP, Daniel, 86159 Augsburg (DE); FUCHS, Tobias, 86356 Neusäß (DE); SANDER, Steffen, 94469 Deggendorf (DE)

(57) **Zusammenfassung**

Bei einer Vorrichtung und einem Verfahren zur Änderung von Schüttguteigenschaften soll eine interne Zirkulationsströmung für das zu behandelnde Partikel-Gas-Gemisch mit einer totraumfreien Prozesskammer bereitgestellt werden. Dies wird dadurch erreicht, dass der Rotor der Vorrichtung scheibenförmig ausgeführt ist, Durchbrechungen aufweist sowie auf der Rotorscheibe gleichmäßig um seinen Umfang angeordnete Beanspruchungselemente aufweist, wodurch die zu behandelnden Partikel in einem Partikel-Gas-Gemisch eine interne Zirkulationsströmung in der Prozesskammer und um den Rotor ausbilden.

## Beschreibung

Die Erfindung richtet sich auf eine Vorrichtung und ein Verfahren zum Ändern von Schüttguteigenschaften nach dem Oberbegriff des Anspruchs 1 und Anspruchs 8.

Es ist bekannt, dass Partikel mit Maschinen unter Einwirkung von mechanischer Energie derart bearbeitet werden können, dass diese für die weitere Verwendung bessere Partikel- und / oder Schüttguteigenschaften aufweisen. Dabei werden die Partikel vorwiegend durch Prall und Scherung beansprucht. Durch die gezielte mechanische Bearbeitung der Partikel werden deren Oberflächeneigenschaften verändert um die Schüttguteigenschaften zu beeinflussen. Es können beispielsweise die Oberflächenstruktur der Partikel geglättet, die Rundheit (Sphärizität) der Partikel erhöht, die Fließfähigkeit der Schüttgüter verbessert und die Schütt- oder Stampfdichte der Schüttgüter erhöht werden. Dabei darf die auf die Partikel einwirkende Energie nicht so hoch sein, dass die Partikel in der Maschine primär zerkleinert werden. Jedoch kann bei spröden Materialien eine geringe Zunahme der Feinheit während der oben beschriebenen Beanspruchung nicht ausgeschlossen werden. Dies macht sich durch das Entstehen eines Feinanteils im Produkt bemerkbar. Dieser Feinanteil stört meist in der späteren Anwendung und muss durch geeignete Maßnahmen vom Produkt entfernt werden. Dies kann beispielsweise durch eine Windsichtung erfolgen. Jedoch können mit der beschriebenen Art der Bearbeitung der Partikel die verschiedensten Materialien mit unterschiedlichen Partikelfeinheiten verarbeitet werden. Es können sowohl spröde als auch elastische Materialien mit derartigen Maschinen bearbeitet werden. Dies können beispielsweise Kunststoffpartikel mit einer mittleren Partikelgröße von 100 µm als auch Graphitpartikel mit einer mittleren Partikelgröße von 20 µm sein.

Derart bearbeitete Kunststoffpartikel werden beispielsweise im 3D-Druck eingesetzt um die Fließfähigkeit der Pulver zu erhöhen. Dies bringt für den 3D-Druck erhebliche Vorteile gegenüber nicht bearbeiteten Partikeln, da sich durch das verbesserte Fließverhalten des Kunststoffpulvers das Rakelverhalten verbessert.

Gerundete Graphitpartikel können beispielsweise in Lithiumionen-Batterien als Anodenmaterial eingesetzt werden. Die oben beschriebene Art der Beanspruchung führt dazu, dass die Stampfdichte des Graphits deutlich erhöht wird und dadurch die Energiedichte der Batterie erhöht werden kann.

In der DE 36 87 219 T2 ist eine gattungsgemäße Vorrichtung offenbart. Die Vorrichtung weist ein zylindrisches Gehäuse mit einem Rotor und Stator auf. Der Rotor besteht aus einer Mahlscheibe mit gleichmäßig um den Umfang angeordneten Schlagelementen, Um den Rotor ist an der Gehäuseinnenfläche ein Stator als Kollisionsring angeordnet. Das zu behandelnde Produkt wird mittig auf Höhe des Rotors in den Arbeitsraum gegeben. Die Vorrichtung weist ein Austragsventil auf, um das Material nach Behandlungsende aus der Vorrichtung auszutragen. Am Gehäuse ist eine Kreislaufleitung angeordnet, die vom Stator weg und auf Höhe der Mitte des Rotors, zurück zum Gehäuse führt. Sie dient dazu, das zu behandelnde Material mit Luft oder einen anderem Gas im Kreislauf vom Stator zurück in die Mitte des Arbeitsraums zu führen, um das Material mehrmals zu beanspruchen.

Nachteilig bei dieser Vorrichtung ist die aufwendige Maschinenkonstruktion durch den externen Materialkreislauf. Außerdem ist die Prozesskammer nicht totraumfrei ausgeführt, da sich hinter der geschlossenen Rotorscheibe Material ablagern kann.

Der Erfindung liegt die Aufgabe zugrunde, eine Vorrichtung zur Änderung von Schüttguteigenschaften bereitzustellen die eine totraumfreie Prozesskammer mit einer internen Zirkulationsströmung für ein zu behandelndes Partikel-Gas-Gemisch aufweist, sowie ein Verfahren dafür.

Bei einer Vorrichtung der eingangs beschriebenen Art, wird die Aufgabe erfindungsgemäß durch das Kennzeichen des Anspruchs 1 und einem Verfahren nach dem Kennzeichen des Anspruchs 8 gelöst.

Die erfindungsgemäße Vorrichtung zur Änderung von Schüttguteigenschaften weist ein Gehäuse auf, dessen Prozesskammer ein Rotor-Stator-System aufnimmt. Der Rotor ist antreibbar mit einem Motor verbunden. Die Prozesskammer weist eine Produktaufgabe und einen Produktauslass auf.

Die Prozesskammer nimmt an ihrer radialen außenliegenden Wand einen Stator auf. Der Stator umgibt den Rotor. Der Stator ist vorzugsweise austauschbar ausgeführt. Der Stator kann glatt, gezackt sein oder jede weitere Ausführungsform aufweisen. In seiner Kontur folgt er der radial außenliegenden Prozesskammerinnenwand. Er weist vorzugsweise eine abgerundete Form auf, die eine Zirkulationsströmung des Partikel-Gas-Gemisches in der Prozesskammer unterstützt.

Der Rotor weist eine Rotorscheibe auf, die mit gleichmäßig um den Umfang angeordneten Beanspruchungselementen versehen ist. Die Beanspruchungselemente können unterschiedliche Formen aufweisen, vorzugsweise sind sie als gerade oder gekrümmte Elemente ausgeführt.

In einer Ausführungsform der Erfindung sind die Beanspruchungselemente auf einer Seite der Rotorscheibe angeordnet. In einer anderen Ausführungsform sind die Beanspruchungselemente auf beiden Seiten der Rotorscheibe angeordnet. Die Geometrie der Beanspruchungselemente ist derart gestaltet, dass auf der einen Seite des Rotors, welche im Folgenden als erste Seite bezeichnet wird, eine größere Ventilatorwirkung durch eine größere Querschnittsfläche der Beanspruchungselemente senkrecht zur Umfangsrichtung des Rotors entsteht, als auf der zweiten Seite. In beiden Fällen können die Beansruchungselemente entweder in radialer Richtung mit dem äußeren Rand der Rotorscheibe abschließen, darüber hinausragen und / oder bis auf die zweite Seite der Scheibe reichen.

Die Rotorscheibe weist mehrere Durchbrechungen auf. Die Rotorscheibe ist an den außenliegenden Flächen der Durchbrechungen angefast um eine Materialablagerung im Bereich der Durchbrechungen aufgrund der Zentrifugalkraft zu vermeiden. Die Durchbrüche ermöglichen eine interne Zirkulationsströmung des Partikel-Gas-Gemisches in der Prozesskammer.

Der Rotor und der Stator sind auswechselbar ausgeführt, um die Intensität der Beanspruchung der Partikel durch verschiedene Ausrüstungen variieren zu können. Des Weiteren wird die Intensität durch die Drehzahl des Rotors eingestellt.

In einer bevorzugten Ausführungsform bildet die Prozesskammer mit der mittig angeordneten Rotornabe eine ringförmige Innengeometrie.

Durch die Ventilatorwirkung des Rotors wird das Gas in der Prozesskammer in Bewegung versetzt, wobei das Gas die in der Prozesskammer befindlichen Partikel mitreist, sodass sich eine interne Zirkulationsströmung des Partikel-Gas-Gemisches in der Prozesskammer im Zusammenspiel mit dem Rotor ausbildet.

Eine erste Komponente der internen Zirkulationsströmung bewegt das Partikel-Gas-Gemisch aufgrund der Ventilatorwirkung des mit Beanspruchungselementen bestückten Rotors, auf der ersten Seite desselben, zum Stator, zwischen Rotor und Stator zur zweiten Seite des Rotors, weiter durch die Durchbrechungen des Rotors zurück auf die erste Seite des Rotors und wieder zum Stator. Überlagert ist eine zweite Komponente der internen Zirkulationsströmung um den Umfang der Prozesskammer durch die Rotation des Rotors. Es bildet sich somit in der Prozesskammer eine innere Zirkulationsströmung des Partikel-Gas-Gemisches aus. Das Partikel-Gas-Gemisch bewegt sich so in einer Spiralströmung durch die Durchbrechungen des Rotors und in der Prozesskammer zwischen Rotorumfang und Prozesskammerwand in Drehrichtung des Rotors herum.

Der Spalt zwischen Stator und Rotor ist eng ausgeführt, damit die vom Rotor erzeugte Gasströmung alle Partikel mitreist, die sich an der Prozesskammerwand und im Bereich des Stators befinden.

In einer Ausgestaltung der Erfindung wird die Prozesskammer mit dem Rotor geneigt angeordnet. Die Neigung der Rotationsachse beträgt in einer bevorzugten Ausführungsvariante 45° zur Horizontalen. Zusammen mit einem lotrecht im oberen Bereich des Prozesskammerdeckels angeordneten Produkteinlasses und einem im unteren Bereich der Prozesskammer angeordneten Produktauslass kann das Produkt einfach und leicht in die Vorrichtung gefüllt und wieder entnommen werden. Dabei ist, neben dem vom Rotor erzeugten Partikel-Gas-Strom in der Prozesskammer, kein von außen eingebrachter Gasstrom zum Materialtransport notwendig.

Die Entleerungsöffnung ist während des Beanspruchungsprozesses geschlossen. Der Einfüllstutzen ist während des Betriebs ebenfalls geschlossen, z.B. durch eine Takt- oder Zellenradschleuse.

Das Gehäuse und bei einigen Ausführungen auch der Deckel der Vorrichtung weisen einen Kühlmantel auf, um die Prozesswärme abzuführen. Bevorzugt wird mit Wasser gekühlt.

Die Partikelbeanspruchung erfolgt durch eine Überlagerung von Prall- und Scherbeanspruchungen. Die Prallbeanspruchung tritt dabei vor allem durch den Prall von Partikeln auf die Beanspruchungselemente des Rotors und / oder auf den Stator auf. Die Scherbeanspruchung tritt dabei vor allem im Spalt zwischen Rotor und Stator sowie zwischen den Partikeln selbst auf. Durch die beschriebene Art der Partikelbeanspruchung werden die Oberfläche der Partikel durch die Scher- und Prallbeanspruchung geglättet, indem gratige Kanten abgerundet werden. Durch die Beanspruchung der Partikel können die Partikel- und / oder Schüttguteigenschaften gezielt positiv beeinflusst werden. Dies sind die Sphärizität und die Oberflächenstruktur der Partikel sowie die BET-Oberfläche, die Fließfähigkeit, die Schüttdichte und die Stampfdichte der Schüttgüter. Bei der Beanspruchung eines Materials müssen nicht alle Material- oder Partikeleigenschaften gleichzeitig verändert werden. Es kann beispielsweise die BET-Oberfläche verändert werden, ohne dass sich die Fließfähigkeit des Pulvers erhöht. Bei spröden Materialien kann z.B. neben dem Rundungsvorgang auch eine Zerkleinerung der Partikel erfolgen bzw. erwünscht sein, um bestimmte Feinheitsspezifikationen zu erreichen.

Das erfindungsgemäße Verfahren zur Änderung der Schüttguteigenschaften wird im Batchprozess in der oben beschriebenen Vorrichtung umgesetzt. Zunächst wird über den Einlassstutzen das zu behandelnde Material in den Prozessraum, dessen Entleerungsöffnung geschlossen ist, eingefüllt und der Einfüllstutzen gegen die Atmosphäre staubdicht abgeschlossen. Der Rotor erzeugt eine hoch turbulente Partikel-Gas-Strömung im Innern der Prozesskammer. Dabei bildet sich in der Prozesskammer eine interne spiralförmige Zirkulationsströmung zwischen Kammerwand und Rotor aus. Die Intensität der Turbulenz hängt von der Form des Stators und Rotors sowie der Rotordrehzahl ab.

In einer weiteren Ausführungsform der Erfindung wird der Prozess zur Änderung von Schüttguteigenschaften als Kaskade ausgeführt. Dafür wird das zu behandelnde Material nach einer ersten batchweisen Beanspruchung aus der Vorrichtung entnommen und einem Klassierprozess, wie Siebung oder Sichtung, unterzogen, um die bei der Beanspruchung in der Vorrichtung gebildeten feinen Partikelanteile aus dem Material zu entfernen. Danach wird das verbleibende bzw. entstaubte Material wieder in die Vorrichtung gefüllt und erneut beansprucht. Diese Schritte werden wiederholt bis die gewünschten Schüttguteigenschaften erzielt wurden.

Es sind auch andere Verfahrensschritte wie Heizen und Kühlen alternativ oder zusätzliches zur Klassierung in die Kaskade integrierbar.

Je nach Material wird in einer Luft oder Inertgasatmosphäre gefahren. Je nach Material und den gewünschten Eigenschaften variieren die Prozesszeiten. Der Füllgrad der Vorrichtung variiert ebenfalls abhängig von Material und zu erzielenden Eigenschaften.

Mineralische Materialien oder organische Materialien wie unterschiedlichste Kunststoffe oder synthetischer und natürlicher Graphit können u.a. mit der Vorrichtung und dem Verfahren verarbeitet werden.

Vorteilhaft erfolgt der Materialtransport in die Maschine ausschließlich durch die Gravitationskraft und der Materialtransport aus der Maschine ausschließlich durch die vom Rotor hervorgerufene Zentrifugalkraft und die Gravitationskraft, daher sind für den Materialtransport keine von außen zugeführten Gasströme notwendig. Für den beschriebenen Prozess wird kein Gebläse benötigt, um einen Gasstrom zu generieren, der für die Änderung der Eigenschaften der Partikel benötigt wird. Durch die abgerundeten Kanten und Flächen im Prozessraum ist dieser strömungstechnisch vorteilhaft gestaltet.
Der Prozessraum ist durch die Rotorgeometrie mit den Durchbrechungen totraumfrei gestaltet.

In den Zeichnungen zeigt:
Figur 1 eine Querschnittsansicht der erfindungsgemäßen Vorrichtung zur Änderungen von Schüttguteigenschaften
Figur 2 eine Ansicht der erfindungsgemäßen Vorrichtung zur Änderung von Schüttguteigenschaften mit den zwei Komponenten der internen Zirkulationsströmung des Partikel-Gas-Gemisches
Figur 3 eine Querschnittsansicht eines Rotors der Vorrichtung mit beidseitig angeordneten Beanspruchungselementen

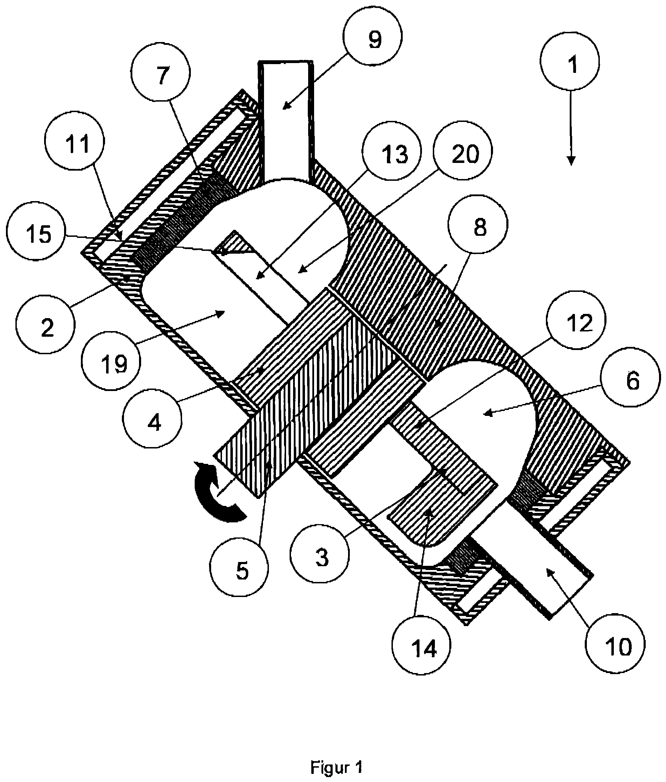

Die Figur 1 zeigt einen Querschnitt durch eine erfindungsgemäße Vorrichtung (1) zur Änderung der Schüttguteigenschaften. Das Gehäuse (2) umgibt einen Rotor (3). Der Rotor (3) ist drehantreibbar ausgeführt und sitzt mit seiner Rotornabe (4) auf einer mit einem Motor angetriebenen Welle (5). Im Gehäuse (2) ist eine Prozesskammer (6) angeordnet, welche zusammen mit der Rotornabe (4) eine ringförmige Innengeometrie aufweist. Den Rotor (3) umgebend ist ein Stator (7) in der radial außenliegenden Innenwand der Prozesskammer (6) angeordnet. Die Prozesskammer (6) wird auf der vorderen Seite von einem Deckel (8) begrenzt. Im oberen Bereich des Deckels (8) ist ein Einfüllstutzen (9) lotrecht angeordnet. Im unteren Bereich des Prozessraumes (6) ist eine Entleerungsöffnung (10) vorgesehen. Umgeben wird der Prozessraum (6) von einem Kühlmantel (11).

Der Stator (7) ist in der Kontur so ausgeführt, dass er der Kontur des ringförmigen Prozessraumes (6) folgt. Außerdem ist der Stator (7) als austauschbares Bauteil ausgeführt. In diesem Ausführungsbeispiel ist der austauschbare Teil des Stators (7) glatt ausgeführt.

Der Rotor (3) besteht aus der Rotornabe (4) und einer Rotorscheibe (12). Die Rotorscheibe (12) weist Durchbrechungen (13) mit Abschrägungen (15) auf. In dieser Ausführung weist die Rotorscheibe (12) drei Durchbrechungen (13) auf. Auf der dem Gehäusedeckel (8) abgewandten Seite des Rotors (3) sind gleichmäßig um den Umfang der Rotorscheibe (12) Beanspruchungselemente (14) angeordnet. Diese haben eine annähernd rechteckige Form, ragen über die Rotorscheibe (12) in den Spalt zwischen Stator (7) und Rotor (3) hinein und decken zusätzlich die Höhe der Rotorscheibe (12) ab.

Das zu behandelnde Material wird über den Einfüllstutzen (9) in die Prozesskammer (6) gefüllt. Der Einfüllstutzen (9) wird gegen die Atmosphäre über eine Zellenradschleuse oder Taktschleuse geschlossen. Das Partikel-Gas-Gemisch wird nun im Batchprozess in einer internen Zirkulationsströmung in der Prozesskammer (6) beansprucht. Die Zirkulationsströmung weist eine erste Komponente auf. Durch die Zentrifugalkraft und die Ventilatorwirkung der Beanspruchungselemente (14) auf der ersten Seite der Rotorscheibe (19) wird das Partikel-Gas-Gemisch radial in Richtung Stator (7) bewegt, von dort über den Spalt zwischen Stator (7) und Rotor (3) in Richtung zum Gehäusedeckel (8) auf die zweite Seite der Rotorscheibe (20), über die Durchbrechungen (13) im Rotor (3) zurück auf die erste Seite des Rotors (19) und wieder in Richtung Stator (7). Darüber ist eine zweite Komponente durch die Rotationsbewegung des Rotors (3) überlagert. Das Partikel-Gas-Gemisch bewegt sich so in einer Spiralströmung durch die Durchbrechungen (13) des Rotors (3) und in Drehrichtung des Rotors (3) in der Prozesskammer (6) herum. Hat das Produkt die gewünschten Eigenschaften, wird es über die Entleerungsöffnung (10) mittels eines Austragsventils aus dem Prozessraum (6) entnommen.

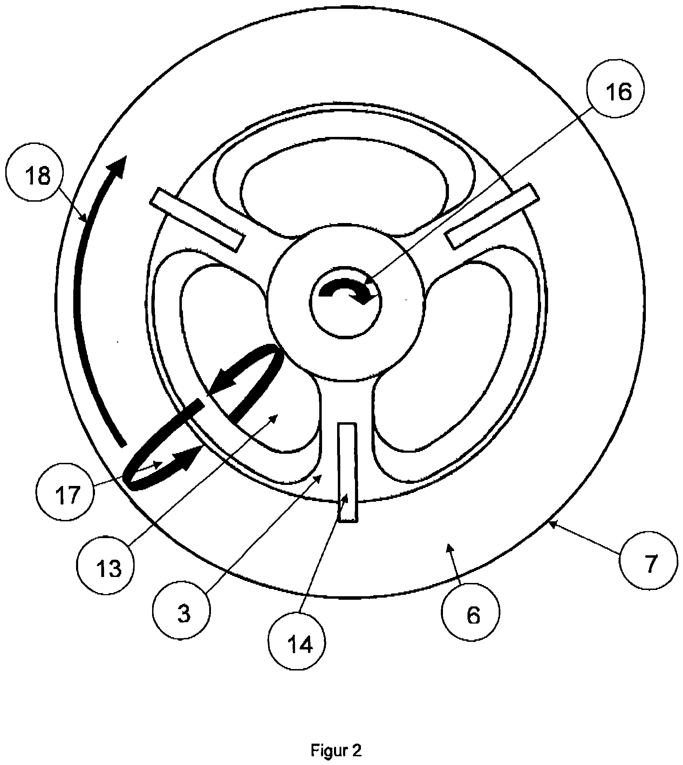

In Figur 2 ist die interne Zirkulationsströmung des Partikel-Gas-Gemisches In der Prozesskammer (6) der Vorrichtung dargestellt. Die Figur zeigt den Rotor (3) mit den Durchbrechungen (13) und den Beanspruchungselementen (14) umgeben vom Stator (7). Die Drehrichtung des Rotors ist durch den Pfeil (16) dargestellt. Die erste Komponente der Zirkulationsströmung des Partikel-Gas-Gemisches durch die Durchbrechungen (13) des Rotors (3) und den Spalt zwischen Rotor (3) und Stator (7) ist durch den Pfeil (17) dargestellt. Die zweite Komponente der internen Zirkulationsströmung im Spalt zwischen Rotor (3) und Stator (7) ist durch den Pfeil (18) dargestellt. Beide Komponenten überlagern sich und bilden eine Spiralströmung.

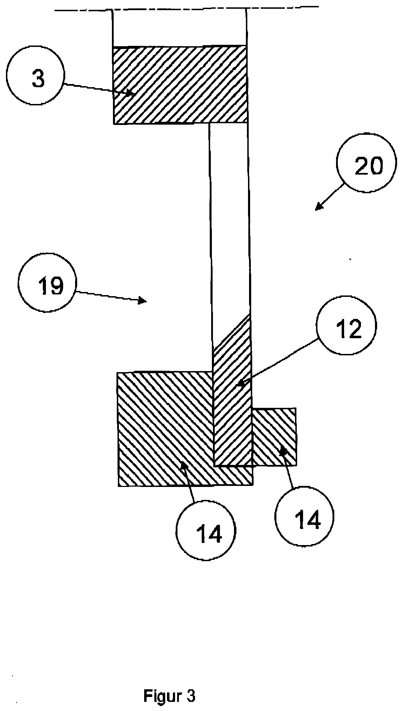

In Figur 3 ist eine weitere Ausführungsform des Rotors (3) dargestellt. Dieser Rotor (3) weist auf beiden Seiten der Rotorscheibe (12) Beanspruchungselemente (14) auf. Dabei weisen die Beanspruchungselemente (14) auf der ersten Seite der Rotorscheibe (19) eine größere Querschnittsfläche auf, als die Beanspruchungselemente (14) auf der zweiten Seite der Rotorscheibe (20). Die Beanspruchungselemente (14) auf beiden Seiten der Rotorscheibe (12) weisen unterschiedliche Querschnittsflächen auf, um eine Ventilatorwirkung zu erzielen.

### Bezugszeichenliste

- 1: Vorrichtung
- 2: Gehäuse
- 3: Rotor
- 4: Rotornabe
- 5: Welle
- 6: Prozesskammer
- 7: Stator
- 8: Deckel
- 9: Einfüllstutzen
- 10: Entleerungsöffnung
- 11: Kühlmantel
- 12: Rotorscheibe
- 13: Durchbrechungen
- 14: Beanspruchungselemente
- 15: Abschrägung an Rotorscheibe
- 16: Drehrichtung des Rotors
- 17: Erste Komponente der internen Zirkulationsströmung
- 18: Zweite Komponente der internen Zirkulationsströmung
- 19: Erste Seite der Rotorscheibe
- 20: Zweite Seite der Rotorscheibe

## Patentansprüche

1. Vorrichtung (1) zur Änderung von Schüttguteigenschaften umfassend eine Prozesskammer (6) mit einem drehantreibbarem Rotor (3) und einem den Rotor (3) umgebenden Stator (7),einem Produkteinlass (9) und einem Produktauslass (10)
**dadurch gekennzeichnet, dass**
der Rotor (3) scheibenförmig ausgeführt ist und Durchbrechungen (13) aufweist, wobei der Rotor (3) auf der Rotorscheibe (12) gleichmäßig um seinen Umfang angeordnete Beanspruchungselemente (14) aufweist, wobei zu behandelnde Partikel in einem Partikel-Gas-Gemisch eine interne Zirkulationsströmung in der Prozesskammer (6) und um den Rotor (3) herum ausbilden.

2. Vorrichtung (1) nach Anspruch 1 **dadurch gekennzeichnet, dass** die interne Zirkulationsströmung eine erste Komponente (17) aufgrund der Ventilatorwirkung des Rotors (3) aufweist, die von einer ersten Seite des Rotors (3) in Richtung Stator (7), über den Spalt zwischen Rotor (3) und Stator (7) auf die zweite Seite des Rotor (3) und durch die Durchbrechungen (13) des Rotors (3) zurück auf die erste Seite des Rotors und zum Stator (7) führt.

3. Vorrichtung (1) nach Anspruch 1 **dadurch gekennzeichnet, dass** die interne Zirkulationsströmung eine zweite Komponente in Drehrichtung des Rotors (16) im Spalt zwischen Rotor (3) und Stator (7) aufweist.

4. Vorrichtung (1) nach einem oder mehreren der vorangegangenen Ansprüche
**dadurch gekennzeichnet, dass**
die Querschnittsfläche der Beanspruchungselemente (14) in Umfangsrichtung des Rotors (3) auf der ersten Seite des Rotors größer ist, als auf der zweiten Seite des Rotors.

5. Vorrichtung (1) nach einem oder mehreren der vorangegangenen Ansprüche
**dadurch gekennzeichnet, dass**
zwischen der radial außenliegenden Prozesskammerinnenwand und der Rotornabe (4) eine ringförmige Prozesskammer (6) ausgebildet ist.

6. Vorrichtung (1) nach einem oder mehreren der vorangegangenen Ansprüche
**dadurch gekennzeichnet, dass**
der Stator (7) der Kontur der Prozesskammer (6) folgt.

7. Vorrichtung (1) nach einem oder mehreren der vorangegangenen Ansprüche
**dadurch gekennzeichnet, dass**
das Gehäuse (2) der Vorrichtung einen Kühlmantel (11) aufweist.

8. Verfahren zur Änderung von Schüttguteigenschaften in einer Vorrichtung (1) nach Anspruch 1 bis 7
**dadurch gekennzeichnet, dass**
die Änderung von Schüttguteigenschaften in einem Batchprozess durchgeführt wird.

9. Verfahren zur Änderung von Schüttguteigenschaften in einer Vorrichtung (1) nach Anspruch 1 bis 7
**dadurch gekennzeichnet, dass**
die Änderung von Schüttguteigenschaften in einer Kaskade bestehend aus mehreren hintereinander geschalteten Batchprozessen, durchgeführt wird.

10. Verfahren nach Anspruch 9
**dadurch gekennzeichnet, dass**
die Änderung von Schüttguteigenschaften in einer Prozesskaskade mit dazwischen geschalteten Klassierprozessen durchgeführt wird.
